# EUROPÄISCHE PATENTSCHRIFT

(11) **EP 4 261 504 B1**
(45) Veröffentlichungstag und Bekanntmachung des Hinweises auf die Patenterteilung: **19.02.2025**
(21) Anmeldenummer: 23166722.1
(22) Anmeldetag: 05.04.2023
(51) Int. Cl.: G01G 19/32, G01G 19/22

(54) **SILOMODULANLAGE**
SILO MODULE INSTALLATION
INSTALLATION DE MODULE DE SILO

(30) Priorität: 12.04.2022 DE 102022108837
(43) Veröffentlichungstag der Anmeldung: 18.10.2023
(73) Patentinhaber: OAS AG, 28359 Bremen (DE)
(72) Erfinder: Döscher, Volker, 27729 Hambergen (DE)
(74) Vertreter: Hoener, Matthias

(56) Entgegenhaltungen:
- CN-U- 208 688 639

## Beschreibung

Die Erfindung betrifft eine Silomodulanlage gemäß dem Oberbegriff des Anspruchs 1.

Siloanlagen können bekanntermaßen der Aufnahme von Schüttgut dienen. Dabei kann das Schüttgut sowohl in den einzelnen Silos gelagert als auch für eine Weiterverarbeitung durch Behälterwaagen, die den einzelnen Silos zugeordnet sind, dosiert werden. Die Silos der hier beschriebenen Art sind zur Aufnahme von verschiedenen Schüttgütern, wie beispielsweise Sand, Bindemittel, Füllstoffe, chemische Rohstoffe und dergleichen ausgebildet. Insbesondere zur Dosierung und Vermischung mehrerer verschiedener Schüttgüter zu einem Mischgut werden mehrere Silos zu einer Silomodulanlage nebeneinander positioniert. In jedem einzelnen Silo können verschiedene Schüttgüter gelagert werden und über die Behälterwaage dosiert abgegeben werden. Durch Zusammenführung der dosierten Mengen wird so das Mischgut zusammengestellt.

Bei bekannten Systemen ist jedem Silo eine entsprechende Behälterwaage zugeordnet, wodurch die Planung, die Montage, der Betrieb und die Wartung der Anlage mit hohen Kosten verbunden sind. Es sind allerdings auch Ausführungsbeispiele bekannt, bei denen Schüttgüter verschiedener Silos einer Behälterwaage zugeführt werden. Bei derartigen Ausführungsbeispielen ist ein komplexes Leitungssystem notwendig, um die Schutzgüter der verschiedenen Silos der Behälterwaage zuzuführen.

Die einzelnen Schüttgüter des zu verarbeitenden Mischguts weisen in der Regel unterschiedliche Partikel- bzw. Korngrößen auf und werden in unterschiedlichen Volumenmengen bzw. Gewichtsmengen dem Mischgut zugeführt. Dabei werden die verschiedenen Schüttgüter je nach Korngröße in Klein-, Mittel- und Großkomponenten unterteilt. Während in der Regel von den Klein- und Mittelkomponenten nur geringe Mengen an Schüttgut benötigt werden, ist der Anteil der benötigten Großkomponenten wesentlich größer. Das hat zum einen Auswirkung auf die benötigten Lagerkapazitäten, als auch auf die notwendige Messgenauigkeit für die Dosierung der einzelnen Komponenten. Während die Großkomponenten in der Regel in großen Silos gelagert werden, dienen der Lagerung der Klein- und Mittelkomponenten kleinere Silos. Außerdem wird für die Dosierung der Klein- und Mittelkomponenten Behälterwaagen mit einer höheren Dosiergenauigkeit verwendet als für die Dosierung der Großkomponenten. Bedingt durch diese Anforderungen an die verschiedenen Lagervolumina der Silos und der unterschiedlichen erforderlichen Messgenauigkeiten der Behälterwaagen nehmen bekannte Silomodulanlagen sehr viel Platz in Anspruch. Außerdem gestaltet sich die Zusammenführung der verschiedenen Schüttgüter bzw. Komponenten zum Mischgut als sehr aufwendig und komplex, was konsequenterweise zu einem sehr komplexen Aufbau der Silomodulanlage führt. Diese Komplexität wirkt sich insbesondere negativ auf die Montagezeit und die Montagekosten aus.

Die CN 208 688 639 U offenbart eine Silomodulanlage gemäß dem Oberbegriff des Anspruchs 1, die bereits mehrere große und mehrere kleine Silos für Schüttgut umfasst. Der Erfindung liegt die Aufgabe zugrunde eine Silomodulanlage zu schaffen, die wenig Platz beansprucht und einfach sowie flexibel aufbaubar ist.

Eine Lösung dieser Aufgabe wird durch die Merkmale des Anspruchs 1 beschrieben. Demnach ist es vorgesehen, dass eine Silomodulanlage mehrere große Silobehälter für Schüttgut, insbesondere für Großkomponenten, und mehrere kleine Silobehälter für Schüttgut, insbesondere für Klein- und/oder Mittelkomponenten, aufweist, wobei die großen Silobehälter ein größeres Aufnahmevolumen als die kleinen Silobehälter aufweisen. Die Silomodulanlage zeichnet sich dadurch aus, dass die kleinen Silobehälter einen kleineren Durchmesser und eine geringere Höhe als die großen Silobehälter aufweisen und dass den großen und den kleinen Silobehältern eine gemeinsame erste Behälterwaage nachgeordnet ist. Außerdem ist den kleinen Silobehältern mindestens eine zweite Behälterwaage nachgeordnet. Die zweite Behälterwaage ist dabei der ersten Behälterwaage vorgeordnet. Somit werden das Schüttgut bzw. die Komponenten aus dem mindestens einen großen Silo mittels der ersten Behälterwaage dosiert bzw. gewogen. Das Schüttgut bzw. die Klein- und/oder Mittelkomponenten des mindestens einen kleinen Silos werden in der zweiten Behälterwaage dosiert bzw. gewogen. Das in der zweiten Behälterwaage dosierte Schüttgut wird dann der nachgeordneten ersten Behälterwaage zugeführt. Durch die Verwendung von zwei verschiedenen Behälterwaagen und der Trennung der Dosiervorgänge für die verschiedenen Schüttgüter kann die Komplexität der gesamten Silomodulanlage reduziert werden. Die beiden Behälterwaagen können unterschiedliche Dosiergenauigkeiten aufweisen. Dadurch lassen sich die verschiedenen Komponenten mit der geforderten Genauigkeit dosieren bzw. abwiegen was zu einem besonders guten Mischergebnis führt. Außerdem führt die Reduzierung der Komplexität der Anlage zu einer erleichterten Montage, was zu einem besonders kostensparenden Aufbau der Anlage führt. Zudem sind die kleinen und die großen Silobehälter wabenartig angeordnet, was im Sinne der gestellten Aufgabe wenig Platz beansprucht und einfach und flexibel aufbaubar ist.

Vorzugsweise ist es vorgesehen, dass mehrere, insbesondere 2, 3, 4, 5, 6, 7, 8, 9, 10, 12 oder mehr, kleine Silobehälter von mehreren großen Silobehältern, insbesondere 3, 4, 5, 6, 7 oder mehr, umschlossen sind. Dabei können die Silobehälter wabenartig angeordnet sein. Ein spezielles Ausführungsbeispiel sieht es vor, dass die großen Silobehälter die kleinen Silobehälter kreisartig umschließen. Die kleinen Silobehälter können ebenfalls kreisringartig angeordnet sein oder paarweise innerhalb der großen Silobehälter positioniert sein. Erfindungsgemäß sind die kleinen Silobehälter von einem rohrartigen Gehäuse umschlossen werden, an dem die großen Silos befestigbar sind. Durch diese wabenartige Anordnung der Silos ist die benötigte Grundfläche für die beanspruchte Silomodulanlage sehr gering. Bei einem Ausführungsbeispiel mit sieben großen Silos und zwölf kleinen Silos beträgt die benötigte Grundfläche beispielsweise lediglich 10 m mal 12,50 m. Die hier beschriebene Anordnung der Silos lässt sich in Abhängigkeit von der Anzahl der Silos auf eine einfache Art und Weise skalieren. Durch dieses Zusammenfassen der kleinen Silos innerhalb der großen Silos und durch die konzentrische Anordnung der großen Silos um die kleinen Silos herum, können viele Komponenten der Anlage, wie beispielsweise die Behälterwaagen, von mehreren Silos gemeinschaftlich verwendet werden. Auch die Anzahl der notwendigen Leitungen und Transportmittel für die Schutzgüter wird durch die erfindungsgemäße relative Anordnung der kleinen und großen Silos reduziert. Auch diese Reduzierung führt zu einem hochsymmetrischen und somit einfachen Aufbau der gesamten Silomodulanlage, was sich sowohl positiv auf die Montagezeit als auch auf die Montagekosten auswirkt. Schließlich wirkt sich Anordnung der großen und kleinen Silos auch positiv auf die Förderzeiten der Schüttgüter aus. Durch die Reduzierung der Leitungen reduziert sich auch die Zeit, um die einzelnen Schüttgüter zu dem Mischgut zusammenzuführen. Eine Verkürzung der Förderzeiten resultiert gleichermaßen in einer Reduzierung des Energieverbrauchs der gesamten Anlage. Wenn weniger Zeit und weniger Leitungen notwendig sind, um die einzelnen Schüttgüter zu ihrem Zielort zu transportieren, kann die Kapazität, also die Anzahl der Dosier- bzw. Mischvorgänge pro Zeiteinheit, der gesamten Anlage erhöht werden.

Bei den hier beanspruchten Behälterwaagen kann es sich um elektronische Behälterwaagen handeln, die unterschiedliche Dosiergenauigkeiten aufweisen. So besitzt die zweite Behälterwaage erfindungsgemäß eine höhere Dosiergenauigkeit als die erste Behälterwaage. Während des Dosierprozesses werden den Behälterwaagen vorbestimmte Schüttgüter zugeführt. Während des Zuführens wird die Menge bzw. das Gewicht des Schüttguts gemessen. Sobald die vorbestimmte Menge an Schüttgut erreicht ist, wird die Zuführung des Schüttguts zu der Behälterwaage unterbrochen. Dieser Prozess kann mit mehreren verschiedenen Schüttgütern solange wiederholt werden, bis alle vorgegebenen Verfahrensschritte für ein derartiges Rezept abgeschlossen sind. Die zusammen geführten Schüttgüter aus der zweiten Behälterwaage werden in die erste Behälterwaage befördert. Im Anschluss wird das Mischgut zur Weiterverarbeitung durch eine einzige Leitung abgeführt.

Dieses Ausführen eines Mischrezeptes wird von einem Prozessleitsystem gesteuert. In diesem Prozessleitsystem werden vorab sämtliche Streugüter und deren Mengen angegeben. Außerdem wird in dem Prozessleitsystem die Zuordnung der verschiedenen Schüttgüter zu den verschiedenen Silos hinterlegt. Durch Ansteuerung verschiedener Förderer und Ventile lassen sich so die verschiedensten Schüttgüter den Behälterwaagen zuführen. Außerdem kann über das Prozessleitsystem der Füllstand der einzelnen Silobehälter gemessen werden. Bei Bedarf ist es denkbar, dass die einzelnen Silos mit dem entsprechenden Schüttgut aufgefüllt werden.

Bevorzugt ist es vorgesehen, dass die Silobehälter einen runden Querschnitt und einen trichterartigen unteren Abschnitt aufweisen, der in einem Behälterauslass mündet. Durch diese Form kann das Schüttgut besonders zuverlässig und störungsfrei aus den Silos herausfließen. Es sind Ausführungsbeispiele denkbar, bei denen die kleinen Silos einen Durchmesser von 70 cm und einer Höhe von 4 m aufweisen. Die großen Silos können einen Durchmesser von bis zu 2,40 m und eine Höhe von 12 m aufweisen. Darüber hinaus ist es denkbar, dass die Silos beliebig andere Dimensionen aufweisen. So ist es auch denkbar, dass die Silos einen rechteckigen bzw. quadratischen Querschnitt aufweisen. Durch diese spezielle Form lassen sich die Silos besonders platzsparend zueinander anordnen.

Ein besonders vorteilhaftes Ausführungsbeispiel der Erfindung kann es vorsehen, dass jedem Silobehälter, vorzugsweise jedem Behälterauslass, ein Fördermittel, insbesondere ein Schneckenförderer, zugeordnet ist, mit dem das Schüttgut aus dem jeweiligen Silobehälter in eine Behälterwaage transportierbar ist. Durch die Verwendung der Fördermittel lassen sich die Mengen des Schüttguts mit einer großen bzw. ausreichenden Genauigkeit den Behälterwaagen zuführen. Insbesondere Schneckenförderer lassen sich besonders vorteilhaft einsetzen, da sie nahezu unabhängig von der Ausrichtung der Förderstrecke das Schüttgut transportieren können. Für eine besonders effiziente Ausnutzung des Bauraumes ist es denkbar, dass die erste Behälterwaage in einer Höhe zwischen den Behälterauslässen der kleinen und der großen Silos angeordnet ist. Dazu muss das Schüttgut aus den großen Silos entgegen der Schwerkraft auf eine entsprechende Höhe der ersten Behälterwaage gefördert werden. Dies lässt sich durch Schneckenförderer problemlos bewerkstelligen.

Weiter ist es denkbar, dass an einer Außenseite der Anlage ein Treppenturm aufstellbar ist. Dieser Treppenturm dient dazu, die einzelnen Plattformebenen der Silomodulanlage zu Montage- und Wartungszwecken auf einfache und sichere Art und Weise begehen zu können. Diesem Treppenturm kann neben der Treppe außerdem ein Lift zugeordnet sein, um kleinere Mengen an Schüttgut für die kleinen Silos auf eine obere Plattform zu transportieren. Dabei kann der Transport mittels Transportbehältern oder Transportwagen erfolgen. Auf der entsprechenden Plattform können die Behälter bzw. Transportwagen sodann manuell durch Bedienpersonen oder mittels eines Krans an die richtige Position oberhalb des entsprechenden kleinen Silos transportiert werden. Sobald sich der Transportbehälter bzw. der Transportwagen an der richtigen Position befindet, wird das entsprechende Silo mit dem Streugut befüllt. Dies kann sowohl manuell als auch vollautomatisiert erfolgen. Auch eine teilautomatisierte Befüllung, bei der von einer Bedienperson der Kran und weitere Fördermittel bedient werden, ist denkbar.

Die großen Silos lassen sich über einen pneumatischen Förderer mit Schüttgut befüllen. Dazu befinden sich an den Außenwandungen der großen Silos entsprechende Rohrleitungen, durch welche das Schüttgut durchgeblasen wird. Der dazu notwendige pneumatische Druck kann 1 bis 2 bar betragen.

Es sei ausdrücklich darauf hingewiesen, dass die Erfindung nicht auf die hier beschriebenen Ausführungsformen beschränkt sein soll. Vielmehr ist es vorgesehen, dass auch andere Ausführungsformen bzw. andere Anordnungen der Silos von der Erfindung umfasst sind.

Ein bevorzugtes Ausführungsbeispiel der vorliegenden Erfindung wird nachfolgend anhand der Zeichnung näher erläutert. In dieser zeigen:
- Fig. 1: eine Seitenansicht einer Silomodulanlage,
- Fig. 2: eine weitere Seitenansicht der Silomodulanlage gemäß der Fig. 1,
- Fig. 3: eine Schnittdarstellung durch die Silomodulanlage gemäß der Fig. 2,
- Fig. 4: eine weitere Schnittdarstellung durch die Silomodulanlage gemäß der Fig. 2,
- Fig. 5: eine weitere Schnittdarstellung durch die Silomodulanlage gemäß der Fig. 2, und
- Fig. 6: eine weitere Schnittdarstellung durch die Silomodulanlage gemäß der Fig. 2.

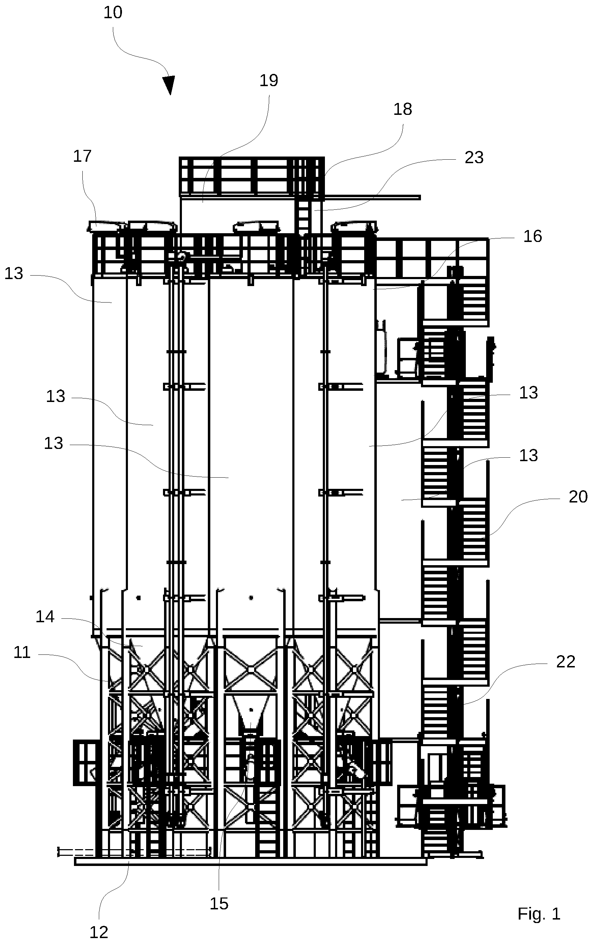

In der Fig. 1 ist ein mögliches Ausführungsbeispiel einer Silomodulanlage 10 dargestellt.

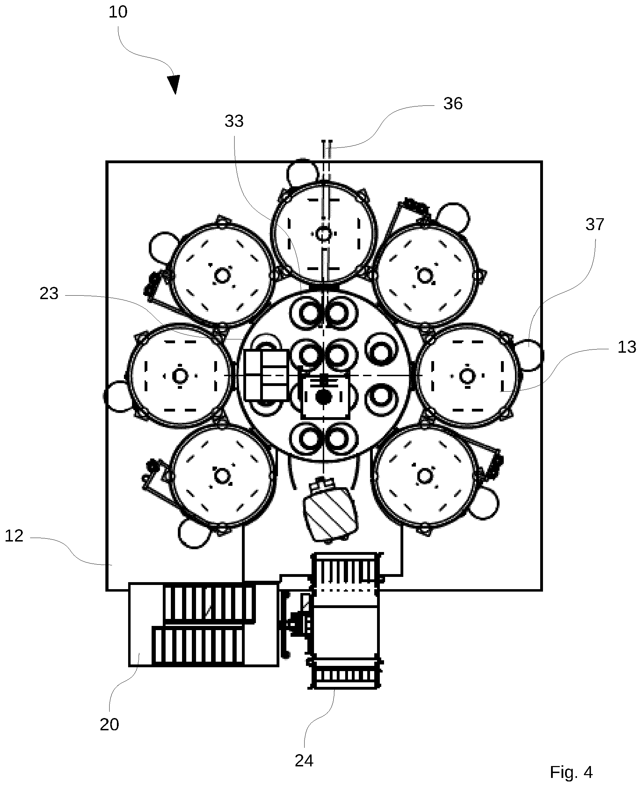

Diese Silomodulanlage 10 besteht im Wesentlichen aus einer Gerüststruktur 11, die auf einem Fundament 12 angeordnet ist. Bei dem hier dargestellten Ausführungsbeispiel der Silomodulanlage 10 sind innerhalb der Gerüststruktur 11 sieben große Silos 13 angeordnet. Aus perspektivischen Gründen sind in der Fig. 1 nur vier der sieben großen Silos 13 sichtbar. Aus den Fig. 4-6 wird ersichtlich, dass diese großen Silos 13 in einer Kreisstruktur angeordnet sind. Die großen Silos 13 weisen einen runden Querschnitt auf und sind senkrecht zu dem Fundament 12 innerhalb der Struktur 11 positioniert. Ein unterer Abschnitt 14 der großen Silos 13 ist trichterartig ausgebildet. An der Spitze des trichterartigen unteren Abschnittes 14 weisen die Silos 13 jeweils einen Auslass 15 auf.

Durch diese Auslässe 15 kann das Schüttgut, welches innerhalb der großen Silos 13 lagerbar ist, abgegeben werden.Die großen Silos 13 weisen an ihren oberen Enden 16 jeweils einen verschließbaren Einlass 17 auf. Durch diese Einlässe 17 lassen sich die Silos 13 pneumatisch über Rohrleitungen 37 mit dem Schüttgut füllen.

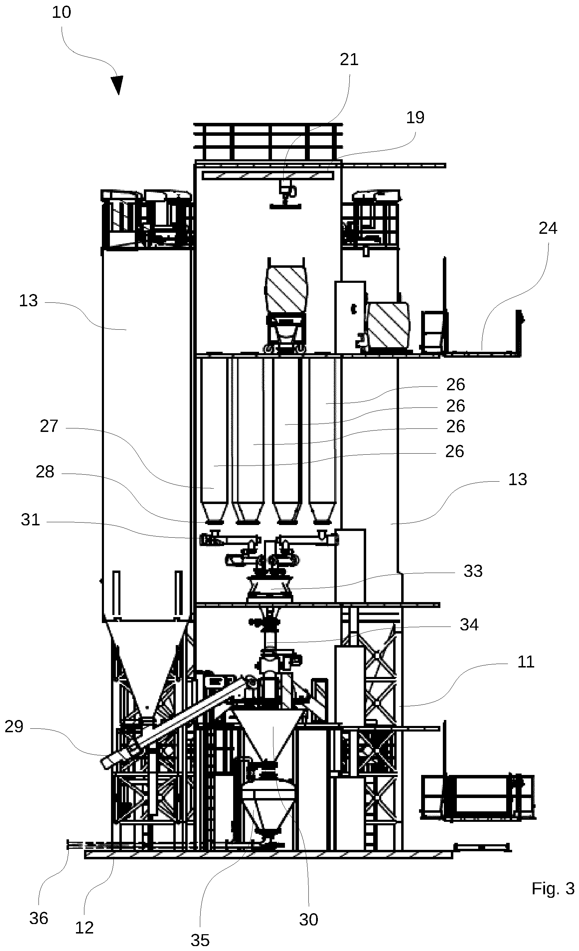

Außerdem befindet sich oberhalb der großen Silos 13 eine Plattform 18, die zu Wartungs- und Montagezwecken dient. Beispielsweise lässt sich von hier aus die Silomodulanlage 10 von oben aus warten. Der Plattform 18 ist jedoch auch eine Traverse 19 zugeordnet, an der ein Kran 21 beweglich gelagert ist (Fig. 3). Dieser Kran dient der Befüllung der Silomodulanlage 10 mit Schüttgütern, die in Säcken oder anderen Behältern verpackt sind.

Seitlich an der Struktur 11 befindet sich ein Treppenturm 20. Das hier dargestellte Ausführungsbeispiel des Treppenturms 20 weist eine Vielzahl einzelner Treppen 22 auf, die derart zueinander angeordnet sind, dass der Treppenturm 20 möglichst wenig Platz in Anspruch nimmt. Der Treppenturm dient dazu, die Silomodulanlage 10 begehen zu können. Über diesen Treppenturm 20 lassen sich verschiedene Ebenen der Silomodulanlage 10 erreichen. Außerdem können Bedienpersonen über den Treppenturm 20 auf die obere Plattform 18 gelangen, um mithilfe des Krans 21 die Silomodulanlage 10 zu befüllen.

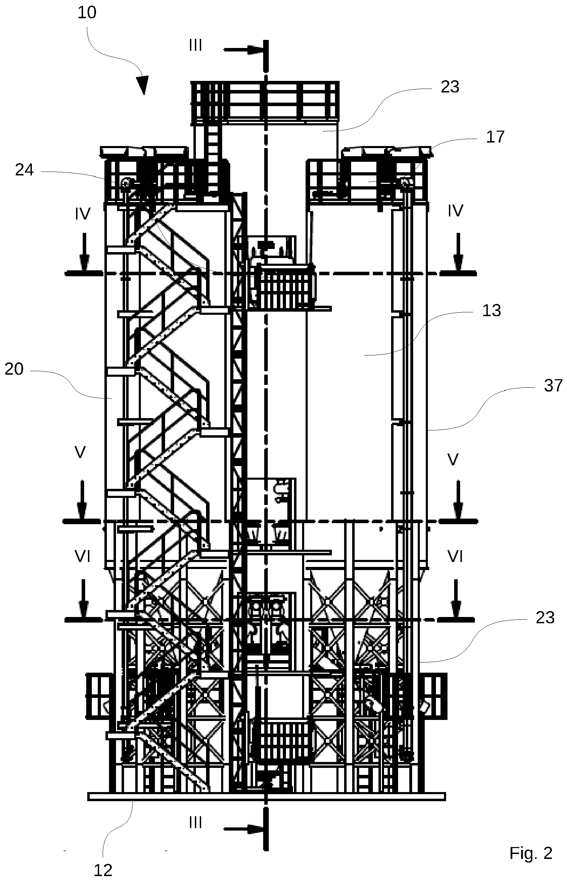

In der Fig. 2 ist die Silomodulanlage 10 gemäß der Fig. 1 von einer anderen Seite dargestellt. Sichtbar sind hier neben dem Treppenturm 20 zwei der sieben großen Silos 13. Durch diese Darstellung wird außerdem ersichtlich, dass sich innerhalb der großen Silos 13 ein rohrartiges Gehäuse 23 befindet. Die großen Silos 13 sind kreisartig an der Außenwandung dieses Gehäuses 23 angeordnet bzw. befestigt. Außerdem ist in Fig. 2 zu erkennen, dass dem Treppenturm 20 ein Lift 24 zugeordnet ist. Dieser Lift 24 ist seitlich an dem Treppenturm 20 auf- und abbewegbar. Über diesen Lift 24 lässt sich beispielsweise Schüttgut, welches in kleineren Mengen verpackt ist, auf die Ebene 25 transportieren.

In der Fig. 3 ist eine vertikale Darstellung der Silomodulanlage 10 dargestellt. In dieser Ansicht wird erkennbar, dass innerhalb des rohrartigen Gehäuses 23 kleine Silos 26 angeordnet sind. Diese kleinen Silos 26 sind sowohl in ihrem Durchmesser als auch in ihrer Höhe und somit in ihrem Aufnahmevolumen wesentlich kleiner als die großen Silos 13. Bei dem hier dargestellten Ausführungsbeispiel der Silomodulanlage 10 sind innerhalb der großen Silos 13 bzw. innerhalb des Gehäuses 23 zwölf kleine Silos 26 angeordnet (Fig. 4). Es ist jedoch auch denkbar, dass mehr oder weniger kleine Silos 26 mit anderen Dimensionen innerhalb der großen Silos 13 angeordnet sind.

Während die großen Silos 13 dazu vorgesehen sind, Schüttgut mit einer groben und feinen Körnung bzw. Schüttgut (Zuschlagstoffe, Bindemittel), von dem in dem Mischgut eine große Menge benötigt wird, sogenannte Großkomponenten, aufzunehmen, dienen die kleinen Silos 26 dazu Klein- und/oder Mittelkomponenten aufzunehmen. Bei diesen Klein- und/oder Mittelkomponenten handelt es sich um Schüttgut, das in weniger großen Mengen benötigt wird. Es ist denkbar, dass in allen Silos 13, 26 verschiedene Mischgüter gelagert werden. Gleichermaßen ist es auch denkbar, dass mehrere Silos 13, 26 der Speicherung der gleichen Schüttgüter dienen.

Auch die kleinen Silos 26 weisen einen runden Querschnitt auf und sind an ihrem unteren Abschnitt 27 trichterartig ausgebildet. Die Auslässe 28 sind nach unten gerichtet. Bei dem hier dargestellten Ausführungsbeispiel sind alle Silos 13, 26 parallel zueinander positioniert.

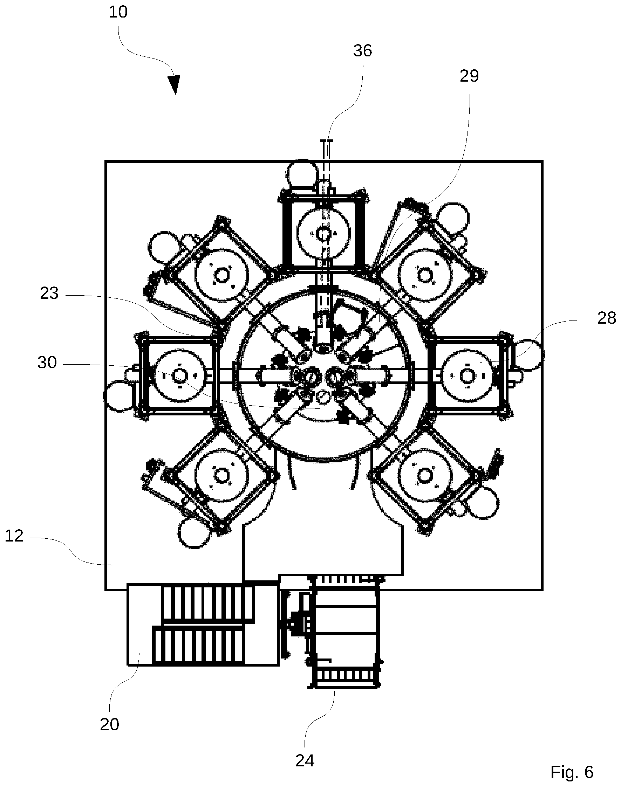

Zur Dosierung und zur Mischung der Schüttgüter sind den Auslässen 15, 28 der Silos 13, 26 Fördermittel zugeordnet. So sind die Auslässe 15 der großen Silos 13 mit Schneckenförderern 29 verbunden. Die sieben Schneckenförderer 29 der sieben großen Silos 13 sind sternförmig in die Mitte der Silomodulanlage 10 ausgerichtet (Fig. 6) und enden allesamt über einer ersten Behälterwaage 30. Insbesondere aus platzsparenden Gründen und um den Höhenunterschied zu überbrücken, verlaufen die Schneckenförderer 29 in einem Winkel schräg nach oben, sodass die Auslässe der Schneckenförderer 29 höher liegen als die Auslässe 15 der großen Silos 13. Über die Schneckenförderer 29 lässt sich das Schüttgut in einer sehr genauen Dosierung der ersten Behälterwaage 30 zuführen. Dabei wird das in die Behälterwaage 30 zugeführte Schüttgut von einem Prozessleitsystem kontinuierlich gemessen bzw. gewogen. Sobald eine vorgegebene Menge eines bestimmten Schüttgutes erreicht ist, wird der Betrieb des entsprechenden Schneckenförderers 29 unterbrochen, sodass kein weiteres Schüttgut in die erste Behälterwaage 30 befördert wird. Auch die Ansteuerung der Schneckenförderer 29 erfolgt über das Prozessleitsystem. Sobald die vorgesehene Menge eines Schüttguts in die Behälterwaage 30 befördert wurde, wird ein weiteres Schüttgut aus einem anderen großen Silo 13 über einen Schneckenförderer 29 in die erste Behälterwaage 30 befördert.

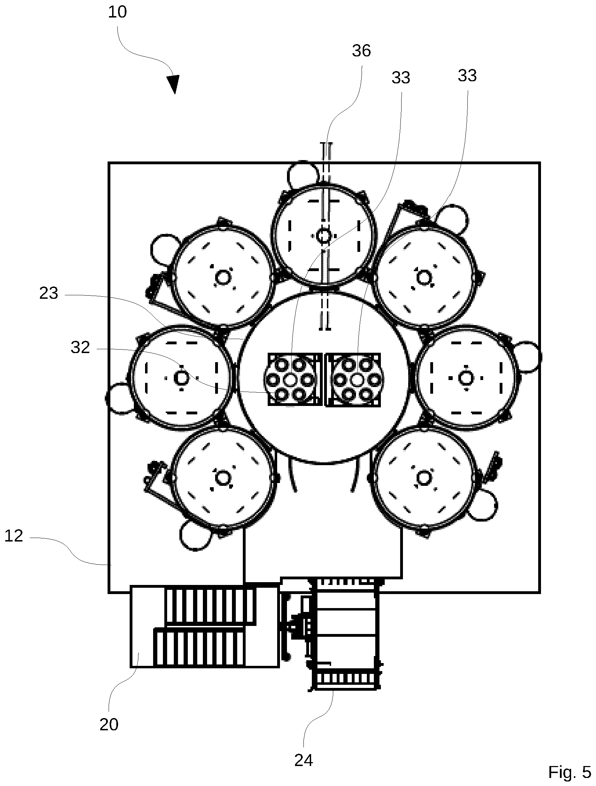

Den kleinen Silos 26 sind ebenfalls Fördermittel 31, insbesondere Schneckenförderer, zugeordnet. Die Auslässe der Fördermittel 31 sind einer Öffnung 32 einer der beiden zweiten Behälterwaagen 33 zugeordnet. Die beiden zweiten Behälterwaagen 33 sind direkt unterhalb der kleinen Silos 26 und oberhalb der ersten Behälterwaage 30 angeordnet (Fig. 5). Auch hier wird genau wie zuvor für die großen Silos 13 beschrieben, durch entsprechendes Verfahren der Fördermittel 31 Schüttgüter aus den kleinen Silos 26 in einer dosierten Menge an die zweiten Behälterwaagen 33 abgegeben. Sobald alle notwendigen Schüttgüter in der vorgegebenen Menge einer der beiden zweiten Behälterwaagen 33 zugeführt wurde, wird diese Mischung der verschiedenen Klein- und/oder Mittelkomponenten über ein Leitungssystem 34 in die erste Behälterwaage 30 befördert. Von dieser ersten Behälterwaage 30 wird das Mischgut sodann in einen Sammelbehälter 35 befördert. Es ist denkbar, dass das Mischgut in diesem Sammelbehälter 35 durchmischt wird. Von diesem Sammelbehälter 35 wird das Mischgut über eine Rohrleitung 36 zur Weiterverarbeitung mittels Druckluft abgefördert.

Insbesondere die Schnittdarstellungen der Fig. 4 bis 6 veranschaulichen, dass für die wabenartige Anordnung der kleinen Silos 26 und der großen Silos 13 eine sehr geringe Grundfläche notwendig ist. Durch diese Anordnung lässt sich auf einem sehr begrenzten Raum eine Vielzahl von Silos 13, 26 anordnen. Durch die Anordnung der beiden Behälterwaagen 30, 33 kann die Komplexität sowie die Länge der notwendigen Rohrleitungen zum Transport der einzelnen Schüttgüter sowie der Mischgüter stark reduziert werden. Das hier beschriebene Prinzip für die Silomodulanlage 10 lässt sich auch ausweiten auf weitere Silos mit einer anderen Dimension. So ist es denkbar, dass zwischen den kleinen Silos 26 noch weitere Silos mit noch kleineren Dimensionen angeordnet sind, um dem Mischgut beispielsweise weitere Zusatzstoffe hinzuzufügen. Gleichermaßen ist es denkbar, dass um die großen Silos 13 herum noch weitere Silos anordbar sind.

**Bezugszeichenliste:**

| | | | |
|---|---|---|---|
| 10 | Silomodulanlage | 36 | Rohrleitung |
| 11 | Gerüststruktur | 37 | Rohrleitung |
| 12 | Fundament | | |
| 13 | großes Silo | | |
| 14 | unterer Abschnitt | | |
| 15 | Auslass | | |
| 16 | oberes Ende | | |
| 17 | Einlass | | |
| 18 | Plattform | | |
| 19 | Traverse | | |
| 20 | Treppenturm | | |
| 21 | Kran | | |
| 22 | Treppe | | |
| 23 | Gehäuse | | |
| 24 | Lift | | |
| 25 | Ebene | | |
| 26 | kleines Silo | | |
| 27 | unterer Abschnitt | | |
| 28 | Auslass | | |
| 29 | Schneckenförderer | | |
| 30 | erste Behälterwaage | | |
| 31 | Fördermittel | | |
| 32 | Öffnung | | |
| 33 | zweite Behälterwaage | | |
| 34 | Leitungssystem | | |
| 35 | Sammelbehälter | | |

## Patentansprüche

1. Silomodulanlage (10) mit mehreren großen Silos (13) für Schüttgut, insbesondere Großkomponenten, und mit mehreren kleinen Silos (26) für Schüttgut, insbesondere für Klein- und/oder Mittelkomponenten, wobei die großen Silos (13) ein größeres Aufnahmevolumen für Schüttgut aufweisen als die kleinen Silos (26), wobei den großen und den kleinen Silos (13, 26) eine gemeinsame erste Behälterwaage (30) nachgeordnet ist und den kleinen Silos (26) mindestens eine zweite Behälterwaage (33) nachgeordnet ist, wobei die mindestens eine zweite Behälterwaage (33) der ersten Behälterwaage (30) vorgeordnet ist, **dadurch gekennzeichnet, dass** die kleinen Silos (26) von einem rohrartigen Gehäuse (23) umschlossen sind, an dem die großen Silos (13) befestigbar sind.

2. Silomodulanlage (10) nach Anspruch 1, **dadurch gekennzeichnet, dass** 2, 3, 4, 5, 6, 7, 8, 9, 10, 11, 12 oder mehr, kleine Silos (26) von 3, 4, 5, 6, 7 oder mehr großen Silos (13), umschlossen sind.

3. Silomodulanlage (10) nach Anspruch 1 oder 2, **dadurch gekennzeichnet, dass** die mehreren kleinen Silos (26) und die mehreren großen Silos (13) wabenartig angeordnet sind.

4. Silomodulanlage (10) nach einem der vorherigen Ansprüche, **dadurch gekennzeichnet, dass** es sich bei den Behälterwaagen (30, 33) um elektronische Behälterwaagen handelt, wobei die zweite Behälterwaage (33) eine höhere Dosiergenauigkeit aufweist als die erste Behälterwaage (30).

5. Silomodulanlage (10) nach einem der vorherigen Ansprüche, **dadurch gekennzeichnet, dass** die zweite Behälterwaage (33) zur Dosierung bzw. Verwiegung der Mittel- und Kleinkomponenten und die erste Behälterwaage (30) zur Dosierung bzw. Verwiegung der Großkomponenten ausgebildet sind.

6. Silomodulanlage (10) nach einem der vorherigen Ansprüche, **dadurch gekennzeichnet, dass** die Dosierung und die Förderung des Streuguts von einem Prozessleitsystem steuerbar sind.

7. Silomodulanlage (10) nach einem der vorherigen Ansprüche, **dadurch gekennzeichnet, dass** die Silos (13, 26) einen runden Querschnitt und einen trichterartigen unteren Abschnitt (14, 27) aufweisen, der in einem Behälterauslass (15, 28) mündet.

8. Silomodulanlage (10) nach einem der vorherigen Ansprüche, **dadurch gekennzeichnet, dass** jedem Silo (13, 26), vorzugsweise jedem Behälterauslass (15, 28), ein Fördermittel (29, 31), insbesondere ein Schneckenförderer (29), zugeordnet ist, mit dem Schüttgut aus dem jeweiligen Silo (13, 26) in eine Behälterwaage (30, 33) transportierbar ist.

9. Silomodulanlage (10) nach einem der vorherigen Ansprüche, **dadurch gekennzeichnet, dass** an der Silomodulanlage (10), insbesondere an einer Außenseite der Silomodulanlage (10), ein Treppenturm (20) aufstellbar ist.

10. Silomodulanlage (10) nach einem der vorherigen Ansprüche, **dadurch gekennzeichnet, dass** die großen Silos (13) mit einem pneumatischen Förderer über Rohrleitungen (37) mit dem Schüttgut befüllbar sind.

11. Silomodulanlage (10) nach einem der vorherigen Ansprüche, **dadurch gekennzeichnet, dass** die kleinen Silos (26) von oben mittels eines Krans (21) oder manuell mit Schüttgut befüllbar sind.

12. Silomodulanlage (10) nach einem der vorherigen Ansprüche, **dadurch gekennzeichnet, dass** das gemischte und dosierte Schüttgut über eine Rohrleitung (36) aus der ersten Behälterwaage (30) zur Weiterverarbeitung abförderbar ist.

## Claims

1. Silo module system (10) having several large silos (13) for bulk material, in particular large components, and having several small silos (26) for bulk material, in particular for small and/or medium-sized components, wherein the large silos (13) have a larger capacity for bulk material than the small silos (26), wherein a common first container scale (30) is arranged downstream of the large and the small silos (13, 26) and at least one second container scale (33) is arranged downstream of the small silos (26), wherein the at least one second container scale (33) is arranged upstream of the first container scale (30), **characterized in that** the small silos (26) are enclosed by a tubular housing (23) to which the large silos (13) can be attached.

2. Silo module system (10) according to Claim 1, **characterized in that** 2, 3, 4, 5, 6, 7, 8, 9, 10, 11, 12 or more small silos (26) are enclosed by 3, 4, 5, 6, 7 or more large silos (13).

3. Silo module system (10) according to Claim 1 or 2, **characterized in that** the several small silos (26) and the several large silos (13) are arranged in a honeycomb pattern.

4. Silo module system (10) according to any of the preceding claims, **characterized in that** the container scales (30, 33) are electronic container scales, wherein the second container scale (33) has a higher metering accuracy than the first container scale (30).

5. Silo module system (10) according to any of the preceding claims, **characterized in that** the second container scale (33) is designed for metering or weighing the medium-sized and small components and the first container scale (30) is designed for metering or weighing the large components.

6. Silo module system (10) according to any of the preceding claims, **characterized in that** metering and conveying of the spreading material can be controlled by a process control system.

7. Silo module system (10) according to any of the preceding claims, **characterized in that** the silos (13, 26) have a round cross section and a funnel-like lower section (14, 27), which opens into a container outlet (15, 28).

8. Silo module system (10) according to any of the preceding claims, **characterized in that** each silo (13, 26), preferably each container outlet (15, 28), is assigned a conveying means (29, 31), in particular a screw conveyor (29), with which bulk material can be transported from the respective silo (13, 26) to a container scale (30, 33).

9. Silo module system (10) according to any of the preceding claims, **characterized in that** a stair tower (20) can be installed on the silo module system (10), in particular on an outer side of the silo module system (10).

10. Silo module system (10) according to any of the preceding claims, **characterized in that** the large silos (13) can be filled with the bulk material by way of a pneumatic conveyor via pipelines (37).

11. Silo module system (10) according to any of the preceding claims, **characterized in that** the small silos (26) can be filled with bulk material from above by means of a crane (21) or manually.

12. Silo module system (10) according to any of the preceding claims, **characterized in that** the mixed and metered bulk material can be conveyed away from the first container scale (30) via a pipeline (36) for further processing.

## Revendications

1. Installation modulaire (10) à silos, ayant plusieurs grands silos (13) pour des produits en vrac, en particulier des composants de grande taille, et ayant plusieurs petits silos (26) pour des produits en vrac, en particulier pour des composants de petite et/ou moyenne taille, les grands silos (13) présentant un plus grand volume de réception pour les produits en vrac que les petits silos (26), une première balance à récipients (30) commune étant placée en aval des grands et des petits silos (13, 26) et au moins une deuxième balance à récipients (33) étant placée en aval des petits silos (26), ladite au moins une deuxième balance à récipients (33) étant placée en amont de la première balance à récipients (30), **caractérisée en ce que** les petits silos (26) sont entourés par un boîtier (23) de type tubulaire auquel les grands silos (13) sont aptes à être fixés.

2. Installation modulaire (10) à silos selon la revendication 1, **caractérisée en ce que** 2, 3, 4, 5, 6, 7, 8, 9, 10, 11, 12 ou plus, petits silos (26) sont entourés par 3, 4, 5, 6, 7 ou plus, grands silos (13).

3. Installation modulaire (10) à silos selon la revendication 1 ou la revendication 2, **caractérisée en ce que** la pluralité de petits silos (26) et la pluralité de grands silos (13) sont agencés en nid d'abeille.

4. Installation modulaire (10) à silos selon l'une quelconque des revendications précédentes, **caractérisée en ce que** les balances à récipients (30, 33) sont des balances électroniques à récipients, la deuxième balance à récipients (33) présentant une précision de dosage supérieure à celle de la première balance à récipients (30).

5. Installation modulaire (10) à silos selon l'une des revendications précédentes, **caractérisée en ce que** la deuxième balance à récipients (33) est conçue pour le dosage ou la pesée des composants moyens et petits, et la première balance à récipients (30) est conçue pour le dosage ou la pesée des grands composants.

6. Installation modulaire (10) à silos selon l'une des revendications précédentes, **caractérisée en ce que** le dosage et le transport du produit à épandre sont aptes à être commandés par un système de contrôle de processus.

7. Installation modulaire (10) à silos selon l'une des revendications précédentes, **caractérisée en ce que** les silos (13, 26) présentent une section transversale ronde et une section inférieure (14, 27) en forme d'entonnoir qui débouche dans une sortie de conteneur (15, 28).

8. Installation modulaire (10) à silos selon l'une des revendications précédentes, **caractérisée en ce qu'**à chaque silo (13, 26), de préférence à chaque sortie de conteneur (15, 28), est associé un moyen de transport (29, 31), en particulier un transporteur à vis sans fin (29), avec lequel le produit en vrac est apte à être transporté du silo respectif (13, 26) vers une balance à récipients (30, 33).

9. Installation modulaire (10) à silos selon l'une des revendications précédentes, **caractérisée en ce qu'**une tour d'escalier (20) est apte à être installée sur l'installation modulaire (10) à silos, en particulier sur un côté extérieur de l'installation modulaire (10) à silos.

10. Installation modulaire (10) à silos selon l'une des revendications précédentes, **caractérisée en ce que** les grands silos (13) sont aptes à être remplis avec le produit en vrac au moyen d'un transporteur pneumatique via des conduites (37).

11. Installation modulaire (10) à silos selon l'une des revendications précédentes, **caractérisée en ce que** les petits silos (26) sont aptes à être remplis de produit en vrac par le haut, au moyen d'une grue (21) ou manuellement.

12. Installation modulaire (10) à silos selon l'une des revendications précédentes, **caractérisée en ce que** le produit en vrac mélangé et dosé est apte à être évacué de la première balance à récipients (30) par une conduite (36) en vue d'un traitement ultérieur.
